# FASCICULE DE BREVET EUROPEEN

(11) **EP 0 771 929 B1**
(45) Date de publication et mention de la délivrance du brevet: **10.10.2001**
(21) Numéro de dépôt: 96810710.2
(22) Date de dépôt: 24.10.1996
(51) Int. Cl.: E06B 9/32, E06B 9/68

(54) **Installation de commande d'éléments de protection solaire**
Steuerungsanlage für Sonnenschutzelemente
Control installation for solar protection units

(30) Priorité: 03.11.1995 FR 9513010
(43) Date de publication de la demande: 07.05.1997
(73) Titulaire: SOMFY, F-74300 Cluses (FR)
(72) Inventeur: Jacquel, Dominique, 74300 Thyez (FR); Orsat, Jean-Michel, 74300 Chatillon-sur-Cluses (FR)
(74) Mandataire: Meylan, Robert Maurice

(56) Documents cités:
- EP-A- 0 453 399
- WO-A-90/03060
- DE-A- 3 801 560
- DE-A- 4 241 781
- DE-C- 4 315 406

## Description

L'invention concerne une installation de commande d'éléments de protection solaire équipant des fenêtres ou autres ouvertures d'un bâtiment, comprenant des actionneurs électromécaniques pour l'actionnement des éléments de protection solaire, au moins une commande manuelle, un capteur équipé de moyens de mesure de l'intensité du rayonnement solaire et de moyens de mesure d'au moins un autre phénomène météorologique, des moyens d'alimentation du capteur en énergie électrique, des moyens de transmission des informations fournies par le capteur, des moyens de traitement et de gestion des informations fournies par le capteur, de consignes et de la commande manuelle pour la commande des actionneurs en fonction des informations reçues du capteur, des consignes et de la commande manuelle.

Une telle installation est décrite dans le document DE-A-3 801 560.

Une telle installation est aussi commercialisée par le demandeur sous la référence SOMFY LINE 1000 . Cette installation comprend un capteur équipé de sondes mesurant l'intensité solaire et la vitesse du vent. Les données fournies par le capteur sont transmises par fil à une centrale de commande située dans un local du bâtiment, centrale qui comprend des moyens de traitement et de gestion des informations reçues en fonction de consignes introduites par l'utilisateur et qui reçoit également des ordres d'une ou plusieurs commandes manuelles et commande les actionneurs des éléments de protection tels que des stores ou des volets roulants. L'énergie électrique nécessaire au fonctionnement du capteur est fournie par une source d'énergie électrique située à la centrale de commande et lui est amenée par une ligne d'alimentation. Cette topologie nécessite la mise en place de deux bus électriques, l'un pour véhiculer l'énergie alimentant les actionneurs et l'autre pour véhiculer les données transmises du capteur à la centrale. Ces bus sont difficilement intégrables à l'esthétisme d'un local existant. Il est possible d'en réduire le nombre en utilisant une liaison radio ou infrarouge pour la transmission des données du capteur à la centrale. La faible énergie nécessaire au capteur pour son fonctionnement peut en outre être fournie par un générateur renouvelable, par exemple une pile. Toutefois, l'accès peu commode du capteur, souvent monté sur un toit, incite à utiliser une source d'énergie inépuisable, par exemple le vent ou le soleil, qu'il suffit de convertir en électricité. A cet effet, il est possible de prélever une partie de l'énergie fournie par une sonde de mesure, telle qu'un anémomètre. Une solution analogue a déjà été proposée pour la transmission à distance de mesures fournies par un compteur de mesure de débit d'un fluide. Une partie de l'énergie fournie par le fluide est utilisée à cet effet comme décrit dans les brevets FR 2 552 543 et US 3 555 902. L'énergie électrique pourrait également être fournie par une cellule photovoltaïque associée à un accumulateur ou un élément capacitif formant accumulateur comme prévu, par exemple dans la télécommande décrite dans le brevet FR 2 606 912.

Afin d'assurer un actionnement adéquat des éléments de protection solaire, les données fournies par le capteur doivent être transmises périodiquement à la centrale, à une fréquence suffisante. Une telle transmission est gourmande en énergie, de telle sorte qu'il est nécessaire de surdimensionner considérablement l'élément prévu à la fois pour mesurer un phénomène météorologique et pour fournir l'énergie électrique au capteur, ce qui nuit à l'esthétique du bâtiment et entraîne un surcoût.

L'invention a pour but de réduire l'énergie électrique nécessaire au fonctionnement d'un capteur dans une installation de commande dans laquelle les informations fournies par le capteur sont transmises sans fil à une centrale de commande.

A cet effet, l'installation de commande selon l'invention est caractérisée en ce que les moyens de transmission sont des moyens de transmission sans fil, que le capteur autonome est équipé d'un générateur de courant convertissant l'énergie fournie par au moins un phénomène météorologique, et que les moyens d'introduction des consignes et les moyens de gestion des consignes et des données fournies par les moyens de mesure sont situés dans le capteur, de telle manière que les seuls signaux transmis à la centrale de commande sont des ordres de commande des actionneurs.

Les moyens de gestion des données et des consignes situés dans le capteur décident de la nécessité de modifier la position des éléments de protection solaire, c'est-à-dire de l'instant où il est nécessaire d'émettre un ordre de commande à destination de la centrale de commande. Tant que les conditions d'ensoleillement ne se sont pas sensiblement modifiées et que la force du vent n'a pas atteint un seuil déterminé, le capteur n'aura pas besoin d'émettre d'ordre, ce qui représente une très grande économie d'énergie. Par contre, pendant ce temps, de l'énergie électrique pourra être obtenue, par exemple par un anémomètre, et stockée dans un accumulateur.

Le dessin annexé représente, à titre d'exemple, un mode d'exécution de l'installation selon l'invention.

La figure 1 est un schéma-bloc du capteur.

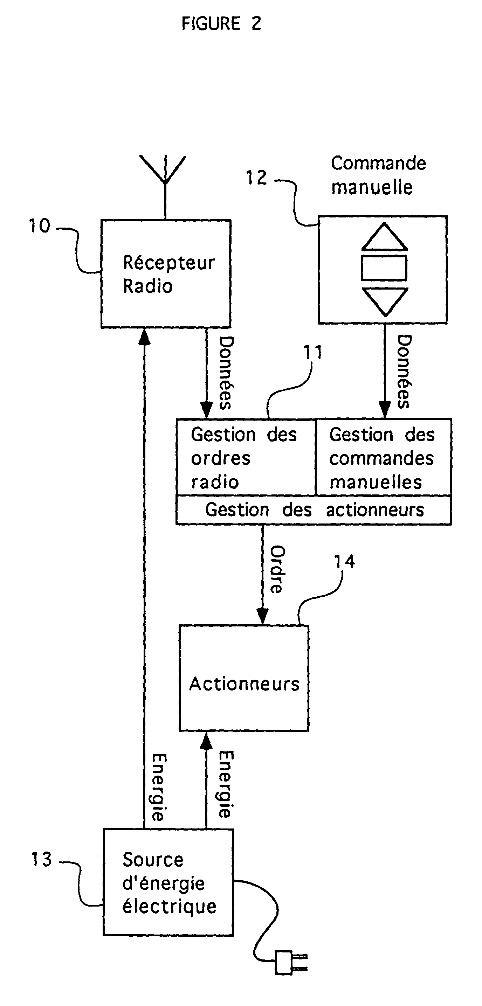

La figure 2 est un schéma-bloc de la partie de l'installation située dans le bâtiment.

La figure 3 représente l'organigramme de l'intelligence de gestion des consignes VENT.

La figure 4 représente l'organigramme de l'intelligence de gestion des consignes SOLEIL.

La figure 5 représente l'organigramme de l'intelligence de gestion des ordres radio.

La figure 6 représente l'organigramme de l'intelligence de gestion des commandes manuelles.

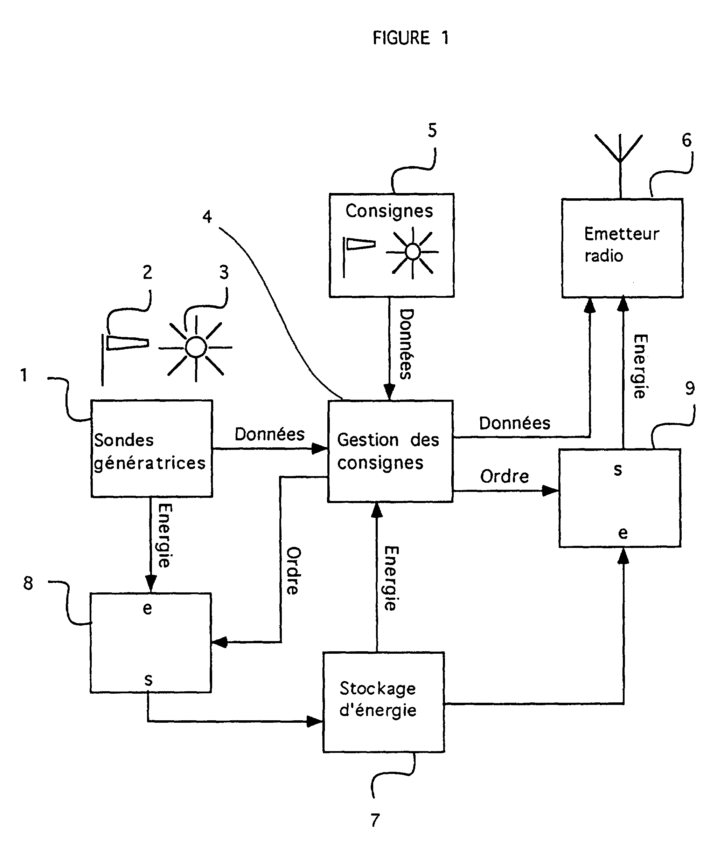

La figure 1 représente les composants de l'unité constituant le capteur.

Ce capteur est équipé de sondes génératrices 1 telles qu'un anémomètre, par exemple du type à moulinet, pour la mesure de la force du vent 2 et une cellule photovoltaïque pour la mesure de l'intensité solaire 3. L'anémomètre entraîne un tacho-générateur qui fournit un courant représentatif de la force du vent. Les données fournies par le sondes 1 sont introduites dans une intelligence de gestion des données et des consignes 4 dans lequel sont également introduites des consignes de forces du vent et d'ensoleillement introduites au moyen d'une interface homme-machine 5, consignes liées au confort de l'usager et à la sécurité de l'élément de protection solaire exposé aux intempéries, dans le cas particulier, au vent. Les ordres élaborés par l'intelligence de gestion des données et des consignes 4, en fonction des données reçues de 1 et des consignes de 5, sont communiqués à un radio-émetteur 6. Le tacho-générateur est également utilisé comme source d'énergie pour l'alimentation du capteur et des moyens qui lui sont associés. Le courant prélevé est envoyé à cet effet dans un moyen de stockage d'énergie 7, par exemple un accumulateur, à travers une porte 8. L'accumulateur 7 alimente directement l'intelligence de gestion des consignes 4 et le radio-émetteur 6 à travers une porte 9. Les portes 8 et 9 sont commandées par l'intelligence de gestion des données et des consignes 4.

Les sondes 1 communiquent, à intervalles donnés, à l'intelligence de gestion des consignes 4, les informations sur les valeurs mesurées. Pendant cette communication, l'intelligence 4 commande la fermeture de la porte 8 de manière à interrompre le stockage d'énergie, c'est-à-dire le prélèvement de courant sur le tacho-générateur. La transmission d'ordres de fermeture ou d'ouverture de l'élément de protection solaire s'effectue seulement lorsqu'une correction de la position de l'élément est nécessaire. L'émetteur 6 n'a donc pas besoin d'émettre de façon continue. L'intelligence de gestion des consignes 4 commande donc l'ouverture de la porte 9, c'est-à-dire l'alimentation du radio-émetteur 6, seulement lorsque cela est nécessaire. Ceci permet donc de réaliser une grande économie d'énergie.

L'unité installée à l'intérieur du bâtiment comprend un radio-récepteur 10, une intelligence 11 de gestion des ordres radio et de gestion de commande manuelle, une interface 12 de commande manuelle et une source d'énergie électrique 13, elle-même alimentée par le secteur. L'intelligence 11 commande les actionneurs 14 des éléments de protection solaire.

Il serait possible de supprimer la porte 8 (figure 1) en utilisant un tacho-générateur à deux enroulements dont l'un est exclusivement destiné à la production d'énergie.

L'énergie pourrait être également ou alternativement fournie par la cellule photovoltaïque ou une cellule photovoltaïque auxiliaire.

Les intelligences 4 et 11 peuvent être des micro-ordinateurs. Les portes 2 et 9 peuvent être constituées d'un relais ou d'un transistor MOS.

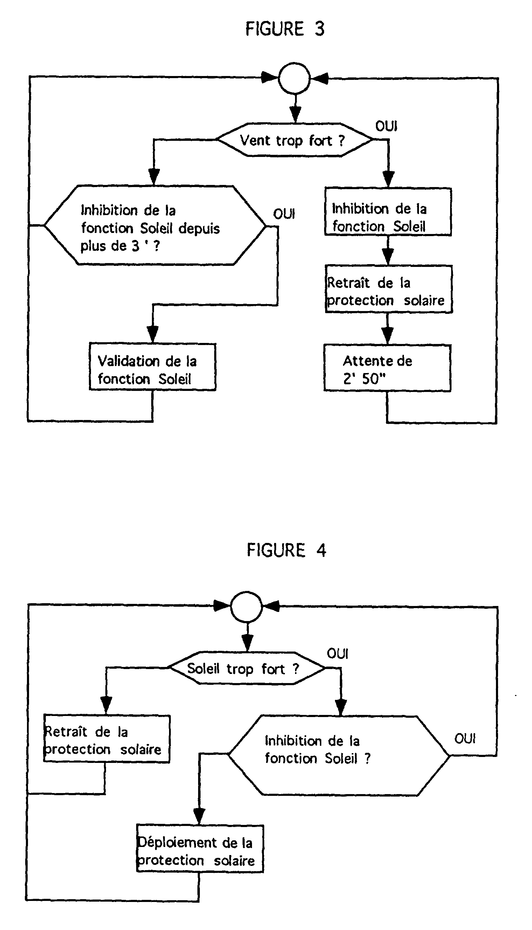

L'information issue de la sonde génératrice pour mesurer la force du vent 2 est intégrée de façon prioritaire sur l'information issue de la cellule photovoltaïque pour la mesure de l'intensité solaire 3 par l'intelligence de gestion des données et consignes 4, de telle sorte qu'en cas de vent suffisamment violent la protection solaire se retire ou ne puisse être déployée pendant une durée renouvelable de trois minutes qui correspondent à l'intervalle maximal estimé entre deux rafales. L'organigramme correspondant est représenté à la figure 3.

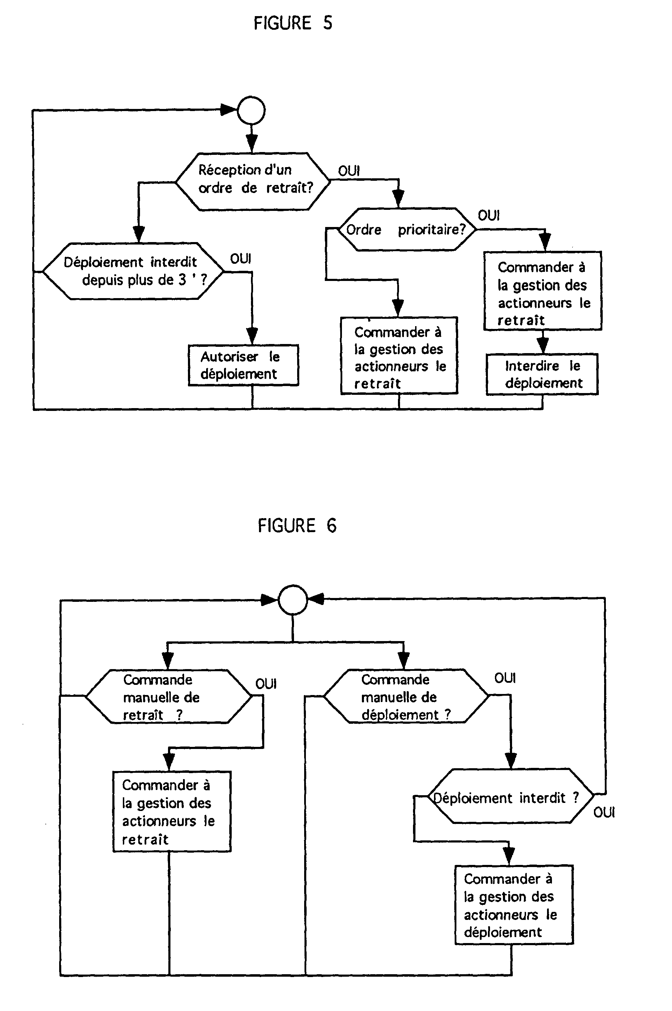

Pendant ce délai de trois minutes, les ordres manuels issus de la commande manuelle 12 de gestion des commandes manuelles dont l'organigramme est représenté à la figure 6 et l'intelligence de gestion des actionneurs maintiendra l'ordre de retrait de la protection solaire, ce qui soit déclenchera le retrait, soit interdira le déploiement.

Si le vent reste trop fort, l'intelligence de gestion des consignes 4 renouvellera son ordre prioritaire de retrait de la protection solaire toutes les deux minutes, cinquante secondes (trois minutes moins quelques secondes) afin de redéclencher une temporisation de trois minutes au niveau de la gestion des commandes manuelles qui continuera à ignorer les données que lui fournit la commande manuelle 12.

Cette émission périodique, mais de période très grande, n'est pas pénalisante pour la sauvegarde de l'énergie du capteur car le tacho-générateur est abondamment alimenté en énergie par l'intensité de la force du vent 2.

L'intelligence de gestion des ordres radio, dont l'organigramme est représenté à la figure 5, distingue deux types d'ordre de retrait. L'un est lié au confort et autorise un redéploiement immédiat, l'autre étant lié à la sécurité de la protection et interdit un redéploiement immédiat. Comme le montre l'organigramme, tant que l'intelligence de gestion des ordres radio reçoit un ordre prioritaire de retrait de la protection toutes les deux minutes cinquante secondes elle interdit le déploiement de la protection et ne prendra pas en considération un ordre de déploiement, tant de la gestion des consignes SOLEIL que des commandes manuelles.

C'est seulement lorsque l'intelligence de gestion des ordres radio ne reçoit plus l'ordre prioritaire de repli de la protection solaire pendant une durée de trois minutes que l'intelligence de gestion des commandes manuelles considérera à nouveau les commandes manuelles, et que la gestion des consignes 4 pourra envoyer un ordre de déploiement de la protection solaire.

L'organigramme de l'intelligence de gestion des consignes concernant l'ensoleillement, représenté à la figure 4, est très simple. Un soleil trop fort entraîne un ordre de déploiement de la protection solaire, pour autant que cette fonction ne soit pas inhibée par la gestion des consignes VENT. Un ensoleillement faible ou nul entraîne un ordre de retrait de la protection solaire.

## Revendications

1. Installation de commande d'éléments de protection solaire équipant des fenêtres ou autres ouvertures d'un bâtiment, comprenant des actionneurs électromécaniques (14) reliés à une centrale de commande pour l'actionnement des éléments de protection solaire, au moins une commande manuelle (12), un capteur équipé de moyens de mesure de l'intensité du rayonnement solaire et de moyens de mesure d'au moins un autre phénomène météorologique, des moyens d'alimentation du capteur en énergie électrique, des moyens de transmission des informations fournies par le capteur, des moyens (4, 11) de traitement et de gestion des informations fournies par le capteur, de consignes (5) et de la commande manuelle pour la commande des actionneurs en fonction des informations reçues des capteurs, des consignes et de la commande manuelle, **caractérisée en ce que** les moyens de transmission sont des moyens de transmission sans fil (6, 10), que le capteur (1 à 7) autonome est équipé d'un générateur de courant convertissant l'énergie fournie par au moins un phénomène météorologique (2) et que les moyens d'introduction de consignes (5) et les moyens de gestion (4) des consignes et des données fournies par les moyens de mesure sont situés dans le capteur, de telle manière que les seuls signaux transmis à la centrale de commande sont des ordres de commande des actionneurs.

2. Installation selon la revendication 1, dont le capteur est équipé d'un anémomètre entraînant une dynamo fournissant un courant représentatif de la force du vent et d'un radio-émetteur (6), **caractérisée en ce que** la dynamo fournit également le courant d'alimentation du capteur et que le capteur comprend des moyens de stockage du courant (7) et des moyens logiques (8) d'interruption du stockage du courant pendant la transmission des données de mesure au moyen de gestion des consignes (4) et des moyens logiques (9) autorisant l'alimentation du radio-émetteur uniquement lors de l'émission d'ordres.

3. Installation selon la revendication 1, dont le capteur est équipé d'un anémomètres entraînant un tacho-générateur fournissant un courant représentatif de la force du vent et d'un radio-émetteur, **caractérisée en ce que** le tacho-générateur est équipé d'un second enroulement statorique fournissant le courant d'alimentation du capteur.

4. Installation selon la revendication 1, **caractérisée en ce que** ledit générateur de courant est photovoltaïque.

5. Installation selon l'une des revendications 1 à 4, dans laquelle le capteur est équipé d'une sonde de mesure de la force du vent, **caractérisée en ce que** lesdits moyens de gestion (4) sont agencés de manière à intégrer de façon prioritaire l'information issue de la sonde de mesure de la force du vent et, si la force du vent est trop élevée, peut provoquer l'émission périodique d'un ordre prioritaire de retrait de l'élément de protection solaire, cet ordre prioritaire de retrait ayant pour effet de déclencher une temporisation, de durée supérieure à la période de ladite émission périodique, dans les moyens de gestion des commandes manuelles (11), temporisation pendant laquelle ces moyens de gestion ignorent les ordres des commandes manuelles.

## Patentansprüche

1. Steuerungsanlage für Sonnenschutzelemente, welche an Fenstern oder anderen Öffnungen eines Gebäudes installiert sind, mit an eine Steuerungszentrale angeschlossenen elektromechanischen Betätigungsvorrichtungen (14) zum Betätigen der Sonnenschutzelemente, mit wenigstens einem manuellen Steuerungsorgan (12), mit einem Messfühler, der mit Mitteln zum Messen der Sonnenstrahlungsintensität und mit Mitteln zum Messen wenigstens einer anderen meteorologischen Erscheinung ausgerüstet ist, mit Mitteln zur Speisung des Messfühlers mit elektrischer Energie, mit Mitteln zum Übertragen der vom Messfühler gelieferten Informationen, und mit Mitteln (4, 11) zum Verarbeiten und Behandeln der vom Messfühler gelieferten Informationen, der Einstellwerte (5) und der manuellen Steuerungsbefehle, um die Betätigungsvorrichtungen als Funktion der von den Messfühlern erhaltenen Informationen, der Einstellwerte und der manuellen Steuerungsbefehle zu steuern, **dadurch gekennzeichnet, dass** die Mittel zum Übertragen drahtlose Übertragungsmittel (6, 10) sind, dass der autonome Messfühler (1 bis 7) mit einem Stromgenerator ausgerüstet ist, welcher die von wenigstens einer meteorologischen Erscheinung (2) gelieferte Energie umwandelt, und dass die Mittel zur Eingabe der Einstellwerte (5) und die Mittel zum Verarbeiten (4) der Einstellwerte und der von den Messmitteln gelieferten Daten im Messfühler angeordnet sind, derart, dass die einzigen zur Steuerungszentrale gesandten Daten die Befehle zum Steuern der Betätigungsvorrichtungen sind.

2. Anlage nach Anspruch 1, bei welcher der Messfühler mit einem Anemometer, das einen Dynamo antreibt, welcher einen für die Windkraft repräsentativen Strom liefert, sowie mit einem Radiosender (6) ausgerüstet ist, **dadurch gekennzeichnet, dass** der Dynamo auch den Strom zum Speisen des Messfühlers liefert und dass der Messfühler Mittel zum Speichern des Stroms (7), logische Mittel (8) zur Unterbrechung der Stromspeicherung während der Übertragung der Messdaten zu den die Einstellwerte verarbeitenden Mitteln (4) sowie logische Mittel (9) aufweist, welche die Speisung des Radiosenders nur dann erlauben, wenn Befehle gesendet werden.

3. Anlage nach Anspruch 1, bei welcher der Messfühler mit einem Anemometer, das mit einen Tachogenerator, welcher einen für die Windkraft repräsentativen Strom liefert, sowie mit einem Radiosender ausgerüstet ist, **dadurch gekennzeichnet, dass** der Tachogenerator mit einer zweiten Ständerwicklung ausgerüstet ist, welche den Speisestrom für den Messfühler liefert.

4. Anlage nach Anspruch 1, **dadurch gekennzeichnet, dass** der erwähnte Stromgenerator ein photo-voltaischer Generator ist.

5. Anlage nach einem der Ansprüche 1 bis 4, bei welcher der Messfühler mit einer die Windkraft messenden Sonde ausgerüstet ist, **dadurch gekennzeichnet, dass** die erwähnten Mittel zum Verarbeiten (4) so ausgebildet sind, dass sie prioritär die von der die Windkraft messenden Sonde ausgegebene Information einbeziehen und, wenn die Windkraft zu hoch ist, die periodische Aussendung eines prioritären Befehls zum Einziehen des Sonnenschutzelements veranlassen können, wobei dieser prioritäre Befehl zum Einziehen in den die manuellen Steuerungsbefehle verarbeitenden Mitteln (11) die Auslösung einer Verzögerungszeit bewirkt, deren Dauer länger als die Periode der erwähnten periodischen Aussendung ist, und dass diese Verarbeitungsmittel während der erwähnten Verzögerungszeit die manuellen Steuerungsbefehle nicht ausführen.

## Claims

1. Control installation for solar protection elements with which windows or other openings of a building are equipped, comprising electromechanical actuators (14) connected to a central control facility for actuating the solar protection elements, at least one manual control (12), a sensor equipped with means for measuring the intensity of the solar radiation and with means for measuring at least one other meteorological phenomenon, means for supplying the sensor with electrical energy, means for transmitting the information delivered by the sensor, means (4, 11) for processing and managing the information delivered by the sensor, reference variables (5) and the manual control for control of the actuators on the basis of the information received from the sensors, reference variables and the manual control, **characterized in that** the transmitting means are wireless transmitting means (6, 10), **in that** the stand-alone sensor (1 to 7) is equipped with a current generator converting the energy delivered by at least one meteorological phenomenon (2) and **in that** the means for entering reference variables (5) and the means (4) for managing the reference variables and the data delivered by the measuring means are located in the sensor, in such a way that the only signals transmitted to the central control facility are commands for controlling the actuators.

2. Installation as claimed in claim 1, in which the sensor is equipped with an anemometer driving a dynamo delivering a current representative of the wind force and with a radio transmitter (6), **characterized in that** the dynamo also delivers the supply current for the sensor and **in that** the sensor comprises means for storing the current (7) and logic means (8) for interrupting storage of the current during the transmission of the measurement data to the reference variables management means (4) and logic means (9) enabling the supplying of the radiotransmitter only during the sending of commands.

3. Installation as claimed in claim 1, in which the sensor is equipped with an anemometer driving a tacho-generator delivering a current representative of the wind force and a radiotransmitter, **characterized in that** the tacho-generator is equipped with a second stator winding delivering the supply current for the sensor.

4. Installation as claimed in claim 1, **characterized in that** said current generator is photovoltaic.

5. Installation as claimed in any one of the claims 1 to 4, in which the sensor is equipped with a probe for measuring wind force, **characterized in that** said management means (4) are devised in such a way as to integrate in priority fashion the information emanating from the probe for measuring the wind force and, if the wind force is too high, can cause the periodic sending of a priority command to withdraw the solar protection element, this priority withdrawal command having the effect of triggering a time delay, of duration greater than the period of said periodic sending, in the manual control management means (11), during which time delay these management means ignore the commands of the manual controls
